# EUROPEAN PATENT SPECIFICATION

(11) **EP 2 186 251 B1**
(45) Date of publication and mention of the grant of the patent: **09.10.2019**
(21) Application number: 07825036.2
(22) Date of filing: 28.08.2007
(51) Int. Cl.: H04L 29/06, H04L 12/46

(54) **REAL-TIME COMMUNICATION SECURITY FOR AUTOMATION NETWORKS**
ECHTZEIT-KOMMUNIKATIONSSICHERHEIT FÜR AUTOMATISIERUNGSNETZWERKE
SÉCURITÉ DE COMMUNICATION EN TEMPS RÉEL POUR DES RÉSEAUX D'AUTOMATISATION

(43) Date of publication of application: 19.05.2010
(73) Proprietor: ABB Schweiz AG, 5400 Baden (CH)
(72) Inventor: VISWANATHAN, Kapaleeswaran, Chennai 600 041 (IN); WIESE, Wilhelm, 32423 Minden (DE); GOPALAN, Aswin, Chennai 600 028 (IN)
(74) Representative: Zimmermann & Partner Patentanwälte mbB
(86) International application number: PCT/IB2007/002497
(87) International publication number: WO 2009/027756

(56) References cited:
- EP-A1- 1 050 991
- EP-A2- 1 496 664
- WO-A2-2005/057341
- US-A1- 2006 097 842
- US-A1- 2006 136 575
- CREVATIN M ET AL: "Security for Industrial Communication Systems", PROCEEDINGS OF THE IEEE, IEEE. NEW YORK, US, vol. 93, no. 6, 1 June 2005 (2005-06-01), pages 1152-1177, XP011133109, ISSN: 0018-9219, DOI: 10.1109/JPROC.2005.849714
- R. Khoussainov, M. Bessonov, P. Gladychev, A. Patel: "On improving Ethernet LAN security", , 1999, XP002665853, Retrieved from the Internet: URL:http://citeseerx.ist.psu.edu/viewdoc/d ownload?doi=10.1.1.5.7524&rep=rep1&type=pd f [retrieved on 2011-12-14]
- KHOUSSAINOV R ET AL: "LAN security: problems and solutions for Ethernet networks", COMPUTER STANDARDS AND INTERFACES, ELSEVIER SEQUOIA. LAUSANNE, CH, vol. 22, no. 3, 1 August 2000 (2000-08-01) , pages 191-202, XP004215511, ISSN: 0920-5489, DOI: 10.1016/S0920-5489(00)00047-7
- ALTERA, IXXAT: "A Universal Approach for Implementing Real-Time Industrial Ethernet", , 2 July 2007 (2007-07-02), XP002665854, Retrieved from the Internet: URL:http://web.archive.org/web/20070702183 441/http://www.future-mag.com/0705/070521. asp [retrieved on 2011-12-15]
- ALTERA: "Altera Delivers First FPGA-Based IP Support for Key Industrial Ethernet Protocols", , 24 July 2007 (2007-07-24), XP002665855, Retrieved from the Internet: URL:http://www.altera.com/corporate/news_r oom/releases/releases_archive/2007/product s/nr-multiprotocol.html [retrieved on 2011-12-15]
- DECOTIGNIE J-D: "Ethernet-Based Real-Time and Industrial Communications", PROCEEDINGS OF THE IEEE, IEEE. NEW YORK, US, vol. 93, no. 6, 1 June 2005 (2005-06-01), pages 1102-1117, XP011133106, ISSN: 0018-9219, DOI: 10.1109/JPROC.2005.849721
- VITTURI S ET AL: "Hybrid Ethernet/IEEE 802.11 Networks for Real-Time Industrial Communications", 10TH IEEE INTERNATIONAL CONFERENCE ON EMERGING TECHOLOGIES AND FACTORY AUTOMATION, IEEE, PISCATAWAY, NJ, USA, vol. 2, 19 September 2005 (2005-09-19), pages 443-449, XP010905516, DOI: 10.1109/ETFA.2005.1612711 ISBN: 978-0-7803-9401-8

## Description

### BACKGROUND

### FIELD OF THE INVENTION

This invention relates to real-time communication security for automation networks.

### DISCUSSION OF PRIOR ART

With the increased requirement for secure remote servicing of automation equipments, usage of wireless devices in automation networks and upcoming Government regulations, it has become important to provide data security services such as confidentiality and authenticity to automation networks on par with IT communication networks.

Cryptography is the science and art for realizing confidential and authentic communications over insecure communications channels, such as the Ethernet or the Internet. Confidentiality is the cryptographic service for ensuring that only a pre-determined set of entities can read a communicated message using a parameter called key. Authentication is the cryptographic service for verifying that only a pre-determined set of entities could have generated a communicated message with or without the usage of a key. The third aspect of information security is availability, which requires a system guarantee that any authorized entity can access an available data on demand and that such an access cannot be prevented or subverted. Higher response rates of computation systems are essential to mitigate the effects of denial of service attacks.

The communication security mechanisms prevalently available today were developed for data-driven communications, such as those over the Internet, which did not encompass real-time or jitter-sensitivity requirements. The lack of limited or practically non-existent security technology for providing data security to such real time and jitter sensitive automation networks where communication latency is crucial is the impetus behind this invention.

The time elapsed between sending a request by an automation application on Automation Network and receiving the corresponding response is called response time. The communications on Automation Networks usually rely on the Ethernet protocol for realizing real-time, low-latency automation communications. The response time required for communications on Automation Networks is usually in the order of milliseconds. The unwarranted delays due to the scheduling action of an RTOS used in a microprocessor implementation of an automation device, the system may not provide hard real time performance as required by an automation network. Since logical communication security measures involve another sequential process in communication stacks, it is very important to ensure that these sequential processes do not contribute adversely to communication overhead.

Siemens SCALANCE S provides security modules with features to protect traffic, data and network activity amidst a set of PLCs. The 905U-G wireless gateway provides secure interaction between several field devices connected by means of several FIELDBUS Modbus, DF1, Profibus DP, Modbus TCP and Ethernet TCP/IP networks. Secure login devices such as the Pine Key product have been proposed for device level communication. The Tofino security solution has been proposed, to protect systems used in automation, from a variety of attacks. These products and solutions do not incorporate features such as broadcast communication or device level redundancy. Further, the implementation of these products does not explicitly call for the use of FPGAs or ASICs. The Eagle_FW_MM_SCTX firewall does provide device level redundancy and the Inominate Mguard firewall is implemented on an FPGA/ASIC platform, however, these features are maintained in isolation of other features such as protocol independence.

WO2006074436 discloses a Firewall method and apparatus for industrial systems wherein networked devices in an automation setup, connected using a plurality of protocols, interact using a dual packet protocol. EP1496664 discloses a System, method and security module for securing the access of a user to at least one automation component of an automation system wherein a safety device is proposed, which is placed within an automation network to provide security to the components interconnected by means of the network. In this patent, the network structure that is protected is different from the present invention. In EP1496664, the safety device appears to be restricting access to the devices using pre-defined access control rules, implemented in the safety device. US2007006292 discloses a Method and system for the transparent transmission of data traffic between data processing devices, corresponding computer program product, and corresponding computer-readable storage medium wherein a system implemented as either a firewall or a proxy is used to provide security within an automation network. This patent proposes the insertion of a computer as a conduit for delivering data between interconnected components, said system being the only security device. In the present invention proposes the use of two embedded devices, one on each data-processing device exchanging data.

The paper Crevatin et al, "Security for Industrial Communication Systems". Proceedings of the IEEE, New York, US, vol. 93, no. 6, 1 June 2005, pages 1152-1177, describes an overview over IT security issues in industrial automation systems. Depending on the type and purpose of the automation system, its components can be distributed on a local, wide-area, or even global scale. The components are connected to each other by networks. A possible communication protocol which is used in such networks is Ethernet. Security concepts to prevent automation systems from attacks may include cryptography-based security as well as design principles for system architecture and operation.

The paper Khoussainov et al, "On improving Ethernet LAN security", 1999, describes a possibility to improve Ethernet LAN security. The use of a secure Network Interface Card, NIC is proposed which is connected to workstations which communicate over Ethernet LAN. For connecting the NIC to the Ethernet LAN the NIC comprises an Ethernet transceiver. The Secure NIC is proposed for Ethernet LAN in an office network infrastructure. The security provided by the secure NIC bases on an encryption of data using public and private keys. All encryption is done inside the NIC. The NIC uses a decentralized key management, wherein the private key used for the encryption is generated inside the NIC. The NIC broadcasts its public key to another NIC on request by the other NIC. A key management is processed bv a special key management unit, KMU. The KMU keeps public and private master keys. Further, the KMU is used to change and certify public keys of other boards (NICs) in the network. It is stated that no key distribution authority is required.

The paper Khoussainov et al, "LAN security: problems and solutions for Ethernet networks". Computer Standards and Interfaces. Elsevier Sequoi, Lausanne, CH, vol. 22, no. 3, 1 August 2000, pages 191-202, basically describes the secure NIC described in the above mentioned paper Khoussainov et al, "On improving Ethernet LAN security", 1999. However, additional information is disclosed which deals with the interoperability with insecure networks like the Internet. It is stated that secure NICs can communicate with secure NICs, only. Therefore, to interconnect a protected Ethernet LAN with an insecure network a special security gateway must be used.

The document ALTERA IXXAT: "A Universal Approach for Implementing Real-Time Industrial Ethernet". 2 July 2007, describes a FPGA-based platform which can be used for various industrial Ethernet protocols. The FPGA-based platform may be used by equipment vendors to design a single product which is able to manage multiple Ethernet protocols.

The document ALTERA: "Altera Delivers First FPGA-Based IP Support for Key Industrial Ethernet Protocols" describes a FPGA-based IP support for key industrial Ethernet protocols.

### SUMMARY OF THE INVENTION

It is the object of this invention to provide a framework for providing a good security for an automation system.

This object is solved by the technical teachings of the independent claims 1, 7 and 10, respectively.

According to embodiments of the present invention a device called a security plug is integral to providing the functionality required for the secure working of the automation system. Advantageously, the security plug is implemented using ASIC/FPGA technology to provide compatibility with existing systems. Further advantageously, the system of the present invention addresses jitter-sensitivity, which is crucial for automation networks, by providing a real-time architecture, with minimal transmission latencies. The system according to embodiments of the present invention has the following features:
Enables secure communication by addressing such attacks as eavesdropping and unauthorized accesses or modifications of network traffic. The present system is Ethernet-based and layers security services over the Ethernet protocol to ensure easy integration into existing networks. Protocol Independence is the hallmark of the present invention along with broadcast support. Further, the system of the present invention is reliable and makes provisions for providing redundancy in the key components that enable security within the system. The framework proposed in the present invention suggests a variety of usage modes of the security plug, a variety of bootstrapping techniques and varying the session key server location, in order to provide a plurality of environments and configurations that encompass a variety of scenarios within automation networks.

According to the present invention a method is provided for secure transmission of data over an automation network, which, advantageously, is protocol independent, real-time, jitter sensitive and reliable. Further advantageously, by minimizing transmission latencies, the method of the present invention is able to address the specific challenges of automation networks, wherein a framework of light-weight protocols act in conjunction for response times suited for these automation networks.

### BRIEF DESCRIPTION OF DRAWINGS

Fig. 1 shows the overall layout of interconnected components in an automation network.
Fig. 2 shows the security plug of the present invention, being placed to provide secure communication within the network.
Fig. 3 shows the framework of the present invention.
Fig. 4 shows a high-level block diagram of an external key server
Fig. 5 shows a high-level block diagram of an internal key server
Fig. 6 describes key management on the security plug.
Fig. 7 shows the security plug architecture using a unified channel for bootstrapping.

### DETAILED DESCRIPTION OF PREFERRED EMBODIMENTS

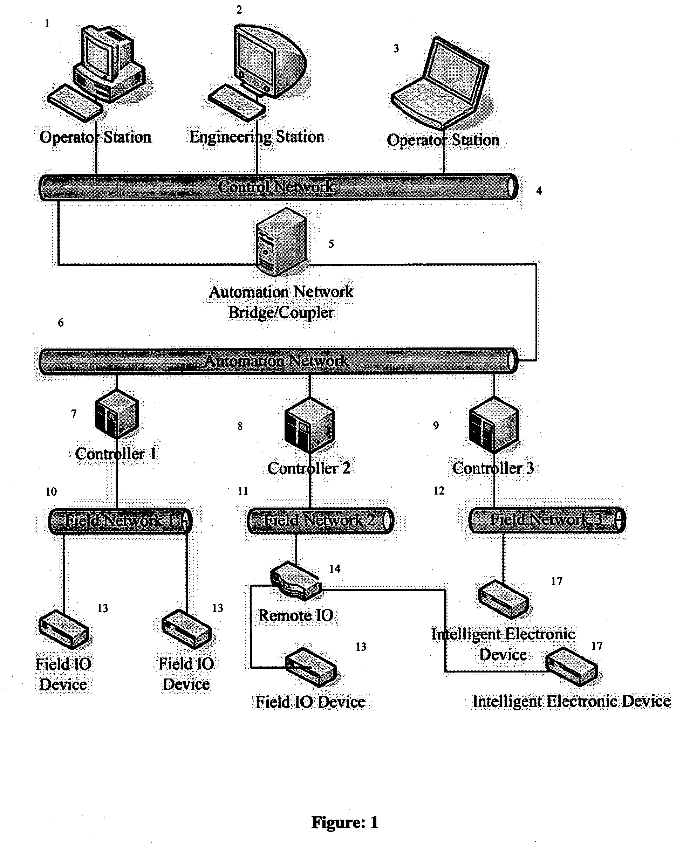

Fig. 1 shows the overall layout of interconnected components in an automation network. A plurality of components including Operator Stations **1,_3** and an Engineering Station **2** are connected by means of a control network **4** to an automation network bridge **5.** This bridge **5** is further connected to an automation network **6** that interconnects several controllers **7,_8,_9** operating on a variety of field networks **10,_11,_12** connected to a number of field devices **13,** remote IO devices **14** and intelligent electronic devices (IED) **17.** The present invention proposes a system, device and method to provide security to the real-time, jitter-sensitive communications on different Automation and Field Networks in a protocol independent manner by designing an architecture which uses Field-Programmable Gate Arrays (FPGAs) or Application-Specific Integrated Circuits (ASICs) for realizing high-speed computations. The architecture has to be efficient to support/adapt different key management schemes, cryptographic algorithms, and communication protocols.

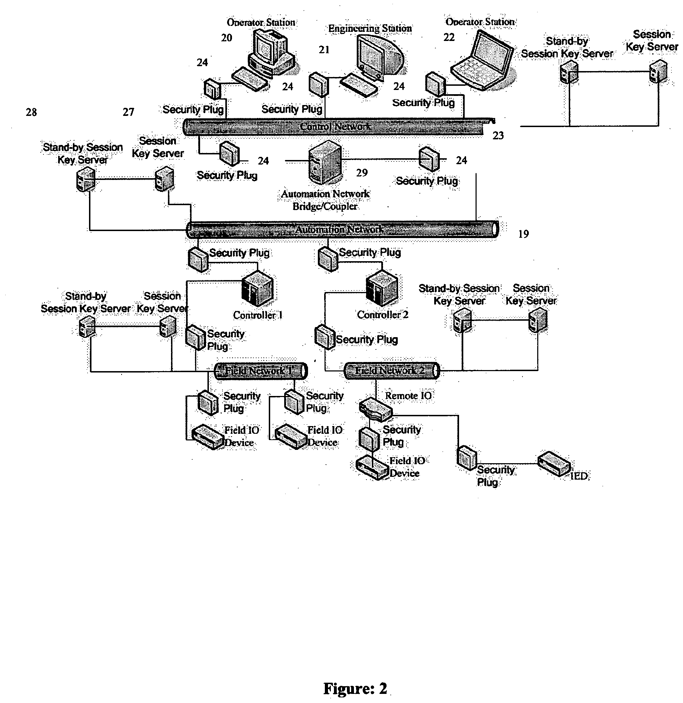

Fig. 2 shows the security plug of the present invention, being placed to provide secure communication within the network. In the system of the present invention, two new components, namely one or more security plugs and one or more key servers are introduced in the automation network, for security. In Fig. 2, operator stations **20, 22** and an engineering station **21** are interconnected by a control network **23,** by means of individual conduits, the security plugs **24.** One or more session key servers **27** and stand-by session key servers **28** are also present to provide secure communication. It is to be noted that when two components interact securely, in the system of the present invention, two security plugs are required, one on each communicating component. For example, Fig. 2 shows the communication between the control network **23** and the automation network **19** by means of an automation network bridge **29.** In this case, two security plugs **24** are placed to enable this communication between the two networks.

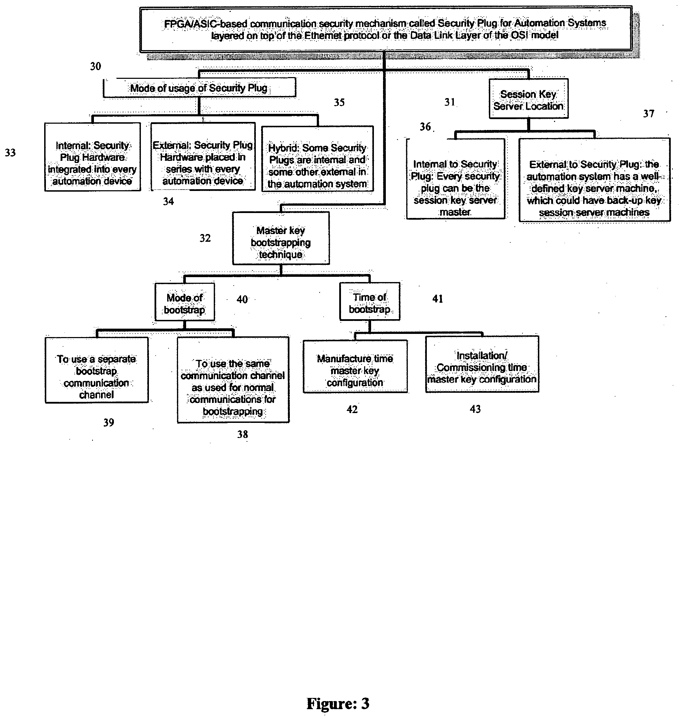

Fig. 3 shows the framework of the present invention, which proposes several modes of operation, for the security plug **30,** key server **31** and bootstrapping technique **32.** The security plug can be used in different modes such as an internal mode **33** wherein the security plug may be placed integrated into a network node such that the module is still in series between the network node and the network. In this case, the security plug hardware would be integrated into the network elements to be provided, namely: Operator Station, Engineering Station, Controller, field device and so on. An external mode **34** could also be used wherein the Security Plug may be placed in series between a network node and the network thus supporting legacy systems. A hybrid mode **35** could also be used, which is a combination of internal and external modes of operation. The session key server **31** could be placed internal to the security plug **36,** wherein each security plug can be a key server master or externally **37,** wherein the automation system has a well-defined key server machine, which could have back up key server session machines, providing redundancy and distributing failure points. The architecture of the security plug would support dynamic formation of a group of communicating devices wherein a device may decide to enter or leave a group at any point of time but would have to inform the session key server present in the network about its action. The functionality of the session key server would be to establish/reestablish a common secret (initialization of new session keys) among the participants to communicate securely. The session keys are used for providing security to the network traffic. The session key server would be responsible to control the group dynamics and accordingly establish session keys. A stand by session key server is also provided for in case the main session key server ceases to function for any reason. The master key bootstrapping technique **32** can also be termed as key management. The bootstrap information can be initialized on to all the security plugs in the automation network using two modes **40.** The same communication channel as used for normal communications such as Ethernet **38.** It is also possible to use an alternate dedicated communication channel **39** only for the purpose of bootstrapping the security plugs. The major factor that would influence the decision of having different communication interface would be the time taken for the bootstrap action. If the number of devices to be bootstrapped is large in number, then a dedicated, fast and efficient communication channel shall be used. There are two types of key management techniques, based on time of bootstrap **41** possible including manufacture-time key-management **42** where the keys are initialized before shipping the Security Plugs to customers and installation-time key-management 43 where the keys are initialized during installation and commissioning of the Security Plugs.

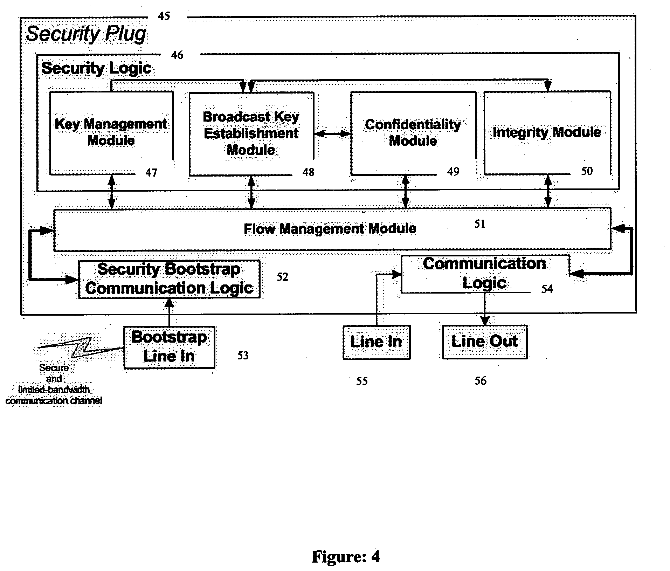

Fig. 4 shows a high-level block diagram of a security plug **45.** The overall security logic **46** incorporates several components such as a key management module **47,** a broadcast key establishment module **48,** a confidentiality module **49** and an integrity module **50.** The security plug **45** further includes security bootstrap communication logic **52** with an incoming bootstrap line **53** and communication logic **54** with lines going in **55** and out **56.** The key management module **47** is responsible for storing the security bootstrap information available from the Security Bootstrap Communication Logic **52** in the Security Plug. It is also responsible for providing the necessary interfaces for other modules in the Security Plug to retrieve the Security Bootstrap Information. The broadcast key establishment module **48** is responsible for using the long-term Security Bootstrap Information to generate and distribute short-term session keys using the services of the Confidentiality module **49,** integrity module **50,** Communication Logic **54** and the Flow Management Module **51.** The confidentiality module **49** provides the interfaces for encrypting and decrypting data. The integrity module **50** provides the interfaces for generating and verifying security checksums for data. These services **49** and **50** would be used by the Broadcast Key Establishment Module **48** and the Flow Management Module **51.** The flow management module **51** ensures the data flow and operational control in the Security Plug **45** and is also responsible for controlling and interfacing the various modules with each other. The bootstrap communication logic **52** provides a near-field communication channel that can be used by the Key Management Device to perform key management operations on the Security Plug. The Keys Manager shall use the Key Management Device. Ideally, this module shall provide a Near-Field Communication such as blue-tooth or physically protected communication channel with a short physical wire. This is to ensure that physical access to the device is fundamentally important to perform the key management operations. The communication logic **54** provides data interfaces for the Flow Management module **51** to interact with any physical medium such as IP, Ethernet, Wireless LAN, Foundation Fieldbus, Modbus, and so on. In order to work at the link level, just above the physical layer of the communication stack, a Security Plug architecture with the following properties is required.
1. **(Use of Field-Programmable Gate Array (FPGA) or Application Specific Integrated Circuit (ASIC))** This property of the architecture would facilitate real-time, minimal-jitter, and secure communications.
2. **(Broadcast communication security)** Since the Ethernet protocol inherently supports broadcast communications, it is important that the security architecture supports authentication of broadcast communications [3]. Such a feature is essential for realizing protocol independence. This property would essentially include a broadcast key-management mechanism and a broadcast message authentication mechanism. The broadcast key-management mechanism would require a suitable form of confidentiality mechanism to be available in the Security Plug [3].

The use of FPGA/ASIC based technology for implementation of the security plug does not introduce jitter in the communication as the system would perform only a dedicated functionality which it is programmed for and there would be no resource contention issues as with the case of a microprocessor. The use of an FPGA does not eliminate jitter but it is significantly reduced when an RTOS is run on a FPGA/CPU based system [1].

The line-in **55** and line-out **56** depicted in the block diagram above may use either a serial or parallel I/O operation. The protocol independence of the Security Plug is realized by the ability to layer the Security Logic over different Communication Logic platforms. The architecture has been designed to meet the requirements of automation networks that include real time communications, reliability, and fault tolerance. The functionalities of the various components of the architecture shall be as follows:

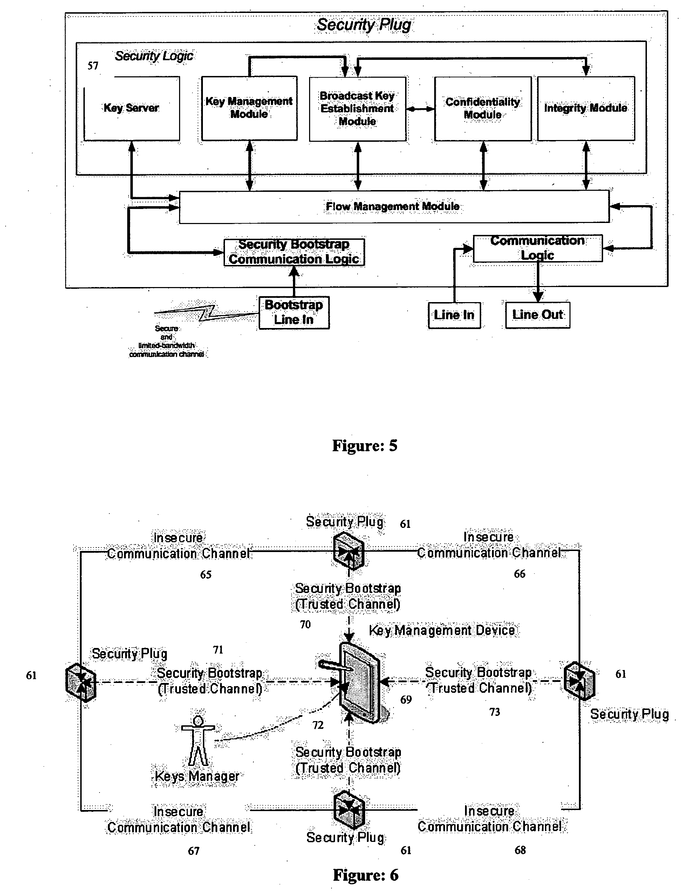

The architecture of the security plug also provisions for every security plug to act as a session key server. In this scenario, a special protocol would be executed among the participating devices to select the master Key-Server that would be responsible for generation and establishment of session keys among the other members of the group. All other Security Plugs having an internal key server and other identified key servers in the network shall serve as standby. A special protocol shall be used to choose the master key server during network boot-up or in the event of failure of the already identified master Key-Server. The high-level block diagram for the security plug with internal key server is as shown in Fig. 5. In this layout, the key server module **57** is internal to the security plug.

Fig. 6 describes key management on the security plug. One or more security plugs **61**are connected via insecure communication channels **65, 66, 67, 68.** These security plugs interact with a key management device **69,** that interacts with the security plugs **61** over a trusted channel **70,71,72,73,** used for secure bootstrapping. The keys initialized during the manufacture phase or installation phase can be termed as master keys. The master keys are long term keys which would then be used to derive session keys which would be used for securing the communications between devices.

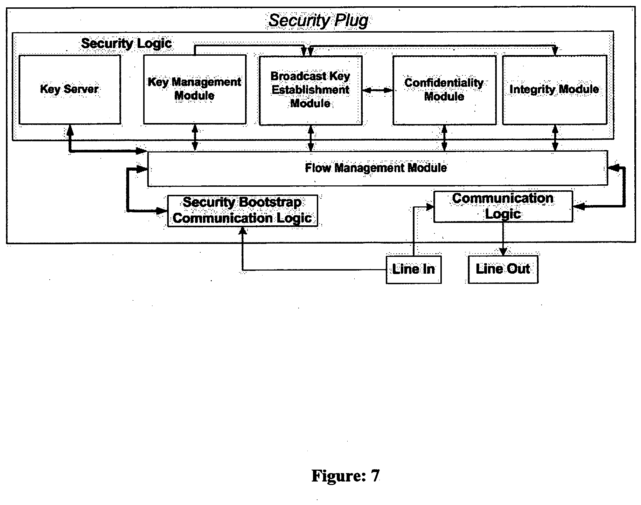

Fig. 7 shows the security plug architecture using a unified channel for bootstrapping with no extra bootstrap line going in.

### REFERENCES

[1] Jason M. Agron, Masters Thesis, "Run-Time Scheduling Support for Hybrid CPU/FPGA SoCs," University of Kansas, Year 2006. Available at: http://www.ittc.ku.edu/research/thesis/documents/jason_agron_thesis.pdf. Last Accessed: November 20, 2006
[2] Ghassan Chaddoud, Isabelle Chrisment, Andre Schaff, Loria - Inria, "Dynamic Group Communication Security," iscc, p. 0049, Sixth IEEE Symposium on Computers and Communications (ISCC'01), 2001.
[3] Internet Engineering Task Force, "Multicast Security Working Group," Last Modified: 2006-01-12. Available at: http://www.ietf.org/html.charters/msec-charter.html. Last Accessed: November 20, 2006
[4] Kapali Viswanathan, Colin Boyd, Ed Dawson, "An Analysis of Integrity Services in Protocols," INDOCRYPT'2001, pages 175-187, Lecture Notes in Computer Science, Volume 2247, ISBN 3-540-43010-5, 2001.

## Claims

1. A system for providing broadcast communication security over Ethernet for an automation network (19) which can be wired or wireless or a combination of wired and wireless technology and which comprises a plurality of automation components, wherein the system comprises:
a. One or more security plugs (24; 45) for providing broadcast communication security between an arbitrary set of automation components attached to the automation network (19), wherein the security plugs (24; 45) are Ethernet based and application protocol-independent;
b. A broadcast key server, for distributing keys to the one or more security plugs (24; 45) to communicate securely; and
c. Bootstrapping means for performing an initialization and a key management across the one or more security plugs (24; 45); and wherein
the respective security plug (24; 45) comprises:
a. A key management module (47) for storing security bootstrap information available from a security bootstrap communication logic (52) and for providing interfaces for other modules of the device for retrieving a security bootstrap information;
b. A broadcast key establishment module (48) for using a long-term security bootstrap information to generate and distribute short-term session broadcast-keys using the services of a communication logic (54), a confidentiality module (49), an integrity module (50) and a flow management module (51);
c. The confidentiality module (49) for providing interfaces for encrypting and decrypting data;
d. The integrity module (50) for providing interfaces for generating and verifying a security checksums for data;
e. The flow management module (51) for ensuring data flow and operational control and for controlling and interfacing the various modules with each other;
f. The security bootstrap communication logic (52) for providing a near-field or physically protected communication channel to be used by the key management module (47) for performing key management operations; and
g. The communication logic (54) for providing data interfaces for the flow management module (51) to interact with any physical medium;
wherein the one or more security plugs (24, 45) are designed to have a broadcast secret key establishment phase of operation wherein a key server module is designed for sending and receiving certain messages related to the identification of one among many key servers as a master key server wherein the master key server is for generating and establishing the session key among all security plugs (24, 45) and wherein the confidentiality module (49) an the integrity module (50) of each security plug are designed to be loaded with session keys upon receiving an activation signal from the master key server and wherein the key management module (47) of each security plug is designed to be updated upon receiving the activation signal from the master key server.

2. System of claim 1, wherein the security plug (24; 45) is deployed using at least one of:
a. An internal mode (33), wherein the security plug (24; 45) is placed integrally with one of the automation components such that a serial connection exists across the security plug (24; 45), the automation component and the automation network (19);
b. An external mode (34), wherein the security plug (24; 45) is placed in series between the automation component and the automation network (19); and
c. A hybrid mode (35) which is a combination of the internal mode (33) and the external mode (34).

3. System of claim 1, wherein the bootstrapping means is designed to establish master keys or long term keys used to derive session keys or short term keys, and to include a plurality of options for:
a. A mode of bootstrap (40), wherein a) a separate communication channel or b) an integrated communication channel, is used to bootstrap the security plugs; and
b. A time of bootstrap (41), wherein a) the master keys are configured at the time of manufacture of the security plugs (24; 45) or b) the master keys are configured during installation or commissioning of the security plugs (24; 45).

4. System of claim 1, comprising a means (48) for broadcast-key establishment and broadcast data-security to support broadcast communication security, wherein the broadcast-key establishment means (48) includes a confidentiality and integrity mechanism, wherein a single broadcast-key establishment enables secure communication in a unicast, multicast or broadcast fashion.

5. System of claim 1, wherein the one or more security plugs are designed to have two phases of operation including:
a. A broadcast secret key establishment, wherein:
i. A key server module is designed for sending and receiving certain messages related to the identification of one among many key servers as a master key server;
ii. The master key server is designed for generating and establishing the session key among all of the security plugs;
iii. A broadcast key establishment module (48) is designed for using a confidentiality module (49) and a integrity module (50) to send key establishment messages to all of the security plugs (24; 45) in the network, wherein it is the responsibility of a key management module (47) to load long term keys for the integrity module (50) and confidentiality module (49) on the broadcast key establishment module (48) such that the confidentiality module (49) and the integrity module (50) do not communicate to a flow control module (51) and the communications are sent and received by the broadcast key establishment module (48);
iv. The key management module (47) is designed to be updated with the latest master keys and initialization vectors;
v. The broadcast key establishment module (48) is designed for loading the session key on the integrity module (50) and the confidentiality module (49);
vi. The security plugs (24; 45) are designed for receiving messages from the master key server and for applying cryptographic processing reverse/identical to that of the master and verifying security claims of the sender;
vii. The confidentiality module (49) and the integrity module (50) are designed to be loaded with session keys upon receiving an activation signal from the master key server, wherein the key management module (47) is designed to be updated upon receiving the activation signal from the master key server; and
b. A Secure communication, wherein the confidentiality module (49) and the integrity module (50) are designed to process messages received from a controller.

6. System of claim 1, wherein the one or more security plugs (24; 45) are implemented by using Field Programmable Gate Arrays or application specific integrated circuits.

7. A device (24; 45) for providing real-time, secure communication in an automation network (19) which can be wired or wireless or a combination of wired and wireless technology and which comprises a plurality of automation components connected by a control network interacting with a plurality of controllers, field devices and intelligent electronic devices, wherein the device comprises:
a. A security logic (46) for incorporating several components including:
i. A key management module (47);
ii. A broadcast key establishment module (48);
iii. A confidentiality module (49); and
iv. An integrity module (50);
b. An Ethernet communication logic including:
i. A security bootstrap communication logic (52); and
ii. A communication logic (54); and
c. A flow management module (51) for ensuring data flow and operational control and for controlling and interfacing the various modules with each other; and
wherein
- the key management module (47) is designed for storing security bootstrap information available from the security bootstrap communication logic (52) and for providing interfaces for other modules of the device for retrieving a security bootstrap information;
- the broadcast key establishment module (48) is designed for using a long-term security bootstrap information to generate and distribute short-term session broadcast-keys using the services of the communication logic (54), the confidentiality module (49), the integrity module (50) and the flow management module (51);
- the confidentiality module (49) is designed for providing interfaces for encrypting and decrypting data;
- the integrity module (50) is designed for providing interfaces for generating and verifying a security checksums for data;
- the security bootstrap communication logic (52) is designed for providing a near-field or physically protected communication channel to be used by the key management module (47) for performing key management operations; and
- the communication logic (54) is designed for providing data interfaces for the flow management module (51) to interact with any physical medium;
wherein the one or more security plugs (24, 45) are designed to have a broadcast secret key establishment phase of operation wherein a key server module is designed for sending and receiving certain messages related to the identification of one among many key servers as a master key server wherein the master key server is for generating and establishing the session key among all security plugs (24, 45) and wherein the confidentiality module (49) an the integrity module (50) of each security plug are designed to be loaded with session keys upon receiving an activation signal from the master key server and wherein the key management module (47) of each security plug is designed to be updated upon receiving the activation signal from the master key server.

8. Device of claim 7, wherein the security bootstrap communication logic (52) is designed for providing a near-field communication or a physically protected communication channel with a physical wire.

9. Device of claim 7, wherein the communication logic (54) is designed for interacting with protocols like IP, Ethernet, Wireless LAN, Foundation Fieldbus, Modbus and any protocol operating over Ethernet.

10. A method for providing real-time, secure communication in an automation network (19) which can be wired or wireless or a combination of wired and wireless technology and which comprises a plurality of automation components connected by a control network interacting with a plurality of controllers, field devices and intelligent electronic devices which are coupled with a) one or more security plugs (24; 45) and b) one or more key servers (27), wherein the one or more security plugs (24; 45) are Ethernet based and the method comprises bootstrapping the one or more security plugs, wherein the bootstrapping includes:
i. A secret key establishment; and
ii. A secure communication, wherein messages received from a controller are processed by a confidentiality module (49) and an integrity module (50) of the respective security plug (24; 45), wherein the confidentiality module (49) provides interfaces for encrypting and decrypting data, and the integrity module (50) provides interfaces for generating and verifying a security checksums for data;
wherein the one or more security plugs (24, 45) are designed to have a broadcast secret key establishment phase of operation wherein a key server module is designed for sending and receiving certain messages related to the identification of one among many key servers as a master key server wherein the master key server is for generating and establishing the session key among all security plugs (24, 45) and wherein the confidentiality module (49) an the integrity module (50) of each security plug are designed to be loaded with session keys upon receiving an activation signal from the master key server and wherein a key management module (47) of each security plug is designed to be updated upon receiving the activation signal from the master key server.

11. Method of claim 10, wherein the bootstrapping includes a step to select among:
i. A mode of bootstrap, wherein a) a separate communication channel or b) an integrated communication channel, is used to bootstrap the one or more security plugs (24; 45); and
ii. A time of bootstrap, wherein a) master keys are configured at the time of manufacture of the one or more security plugs (24; 45) or b) the master keys are configured during installation or commissioning of the one or more security plugs (24; 45).

12. Method of claim 10, wherein the step of secret key establishment comprises the steps of:
i. Sending and receiving certain messages at the key server module related to an election of one of the key servers present in all the security plugs (24; 45) as a master security plug;
ii. Generating and establishing a session key among all the security plugs (24; 45);
iii. Sending key establishment messages to all the security plugs (24; 45) in the network by the broadcast key establishment module (48) using the confidentiality module (49) and the integrity module (50), wherein it is the responsibility of the key management module to load the necessary long term keys for the integrity module (50) and confidentiality module (49) on the broadcast key establishment module (48) such that the confidentiality module (49) and the integrity module (50) do not communicate to a flow control module (51) and the communications are sent and received by the broadcast key establishment module (48);
iv. Updating a key management module (47) with lmaster keys and initialization vectors;
v. Loading a session key on the integrity module (50) and confidentiality module (49) by means of the broadcast key establishment module (48);
vi. Designating other security plugs as slaves for receiving messages from the master security plug and for applying necessary cryptographic processing identical to that of the master, and for verifying security claims of the sender;
vii. Upon receiving an activation signal from the master security plug, loading session keys on the confidentiality module (49) and the integrity module (50), and updating in the key management module (47).

13. Method of claim 10, comprising: supporting secure communication using unicast, multicast or broadcast communication.

## Patentansprüche

1. System zum Bereitstellen von Rundfunkkommunikationssicherheit über ein Ethernet für ein Automationsnetz (19), das verdrahtet oder drahtlos oder eine Kombination aus verdrahteter und drahtloser Technologie sein kann, und das eine Vielzahl von Automationskomponenten umfasst, wobei das System umfasst:
a. einen oder mehrere Sicherheitsstecker (24; 45), um eine Rundfunkkommunikationssicherheit zwischen einem beliebigen Satz von Automationskomponenten bereitzustellen, die mit dem Automationsnetz (19) verbunden sind, wobei die Sicherheitsstecker (24; 45) Ethernet-basiert und anwendungsprotokollunabhängig sind;
b. einen Rundfunkschlüsselserver, um Schlüssel an den einen oder die mehreren Sicherheitsstecker (24; 45), zu verteilen; um sicher zu kommunizieren, und
c. ein Urlademittel, um eine Initialisierung und eine Schlüsselverwaltung an dem einen oder den mehreren Sicherheitsstecker/n (24; 45) durchzuführen; und wobei
der jeweilige Sicherheitsstecker (24; 45) umfasst:
a. ein Schlüsselverwaltungsmodul (47), um Sicherheitsurladeinformationen zu speichern, die von einer Sicherheitsurladekommunikationslogik (52) erhältlich sind, und um Schnittstellen für andere Module der Vorrichtung bereitzustellen, um eine Sicherheitsurladeinformation abzurufen;
b. ein Rundfunkschlüsselerstellungsmodul (48), um eine langfristige Sicherheitsurladeinformation zum Generieren und Verteilen von kurzfristigen Sitzungsrundfunkschlüsseln anhand der Dienste einer Kommunikationslogik (54), eines Vertraulichkeitsmoduls (49), eine Integritätsmoduls (50) und eines Ablaufverwaltungsmoduls (51) zu verwenden;
c. das Vertraulichkeitsmodul (49) zum Bereitstellen von Schnittstellen zum Verschlüsseln und Entschlüsseln von Daten;
d. das Integritätsmodul (50) zum Bereitstellen von Schnittstellen zum Generieren und Verifizieren einer Sicherheitsprüfsumme für Daten;
e. das Ablaufverwaltungsmodul (51) zum Sicherstellen eines Datenflusses und einer Operationssteuerung und zum Steuern und Vernetzen der verschiedenen Module untereinander;
f. die Sicherheitsurladekommunikationslogik (52) zum Bereitstellen eines Nahfeld- oder physisch geschützten Kommunikationskanals, der durch das Schlüsselverwaltungsmodul (47) verwendet werden soll, um Schlüsselverwaltungsoperationen durchzuführen; und
g. die Kommunikationslogik (54) zum Bereitstellen von Datenschnittstellen für das Ablaufverwaltungsmodul (51) zur Interaktion mit irgendeinem physischen Medium;
wobei der eine oder die mehreren Sicherheitsstecker (24; 45) dazu konzipiert sind, eine Betriebsphase der Rundfunkgeheimschlüsselerstellung zu haben, wobei ein Schlüsselservermodul dazu konzipiert ist, bestimmte Nachrichten zu senden und zu empfangen, die sich auf die Identifizierung eines von vielen Schlüsselservern als Hauptschlüsselserver beziehen, wobei der Hauptschlüsselserver zum Generieren und Erstellen des Sitzungsschlüssels unter allen Sicherheitssteckern (24; 45) bestimmt ist, und wobei das Vertraulichkeitsmodul (49) und das Integritätsmodul (50) jedes Sicherheitssteckers dazu konzipiert sind, auf einen Empfang eines Aktivierungssignals vom Hauptschlüsselserver hin mit Sitzungsschlüsseln versorgt zu werden, und wobei das Schlüsselverwaltungsmodul (47) jedes Sicherheitssteckers dazu konzipiert ist, auf den Empfang des Aktivierungssignals vom Hauptschlüsselserver hin aktualisiert zu werden.

2. System nach Anspruch1, wobei der Sicherheitsstecker (24; 45) unter Verwendung mindestens eines der folgenden Modi eingesetzt wird:
a. eines internen Modus (33), wobei der Sicherheitsstecker (24; 45) integral mit einer der Automationskomponenten so angeordnet wird, dass eine Reihenverbindung am Sicherheitsstecker (24; 45), der Automationskomponente und dem Automationsnetz (19) besteht;
b. eines externen Modus (34), wobei der Sicherheitsstecker (24; 45) in Reihe zwischen der Automationskomponente und dem Automationsnetz (19) angeordnet ist; und
c. eines hybriden Modus (35), bei dem es sich um eine Kombination aus dem internen Modus (33) und dem externen Modus (34) handelt.

3. System nach Anspruch 1, wobei das Urlademittel dazu konzipiert ist, Hauptschlüssel oder langfristige Schlüssel zu erstellen, die dazu verwendet werden, Sitzungsschlüssel oder kurzfristige Schlüssel abzuleiten, und eine Vielzahl von Optionen für Folgendes zu enthalten:
a. einen Urlademodus (40), wobei a) ein separater Kommunikationskanal oder b) ein integrierter Kommunikationskanal verwendet wird, um die Sicherheitsstecker urzuladen; und
b. eine Urladezeit (41), wobei a) die Hauptschlüssel zum Herstellungszeitpunkt der Sicherheitsstecker (24; 45) konfiguriert werden oder b) die Hauptschlüssel während der Installation oder Kommissionierung der Sicherheitsstecker (24; 45) konfiguriert werden.

4. System nach Anspruch 1, ein Mittel (48) zur Rundfunkschlüsselerstellung und Rundfunkdatensicherheit umfassend, um die Rundfunkkommunikationssicherheit zu unterstützen, wobei das Rundfunkschlüsselerstellungsmittel (48) einen Vertraulichkeits- und Integritätsmechanismus enthält, wobei eine einzelne Rundfunkschlüsselerstellung eine sichere Kommunikation auf eine Unicast-, Multicast- oder Rundfunkweise ermöglicht.

5. System nach Anspruch 1, wobei der eine oder die mehreren Sicherheitsstecker dazu konzipiert sind, zwei Operationsphasen zu haben, darunter:
a. eine Rundfunkgeheimschlüsselerstellung, wobei:
i. ein Schlüsselservermodul dazu konzipiert ist, bestimmte Nachrichten zu senden und zu empfangen, die sich auf Identifizierungen eines von vielen Schlüsselservern als Hauptschlüsselserver beziehen;
ii. der Hauptschlüsselserver dazu konzipiert ist, den Sitzungsschlüssel unter allen Sicherheitssteckern zu generieren und zu erstellen;
iii. ein Rundfunkschlüsselerstellungsmodul (48) dazu konzipiert ist, ein Vertraulichkeitsmodul (49) und ein Integritätsmodul (50) zu verwenden, um Schlüsselerstellungsnachrichten an alle der Sicherheitsstecker (24; 45) im Netz zu senden, wobei es in der Verantwortlichkeit des Schlüsselverwaltungsmoduls (47) liegt, langfristige Schlüssel für das Integritätsmodul (50) und Vertraulichkeitsmodul (49) so auf das Rundfunkschlüsselerstellungsmodul (48) zu laden, dass das Vertraulichkeitsmodul (49) und das Integritätsmodul (50) nicht mit einem Ablaufsteuermodul (51) kommunizieren und die Kommunikationen durch das Rundfunkschlüsselerstellungsmodul (48) gesendet und empfangen werden;
iv. das Schlüsselverwaltungsmodul (47) dazu konzipiert ist, mit den neuesten Hauptschlüsseln und Initialisierungsvektoren aktualisiert zu werden;
v. das Rundfunkschlüsselerstellungsmodul (48) dazu konzipiert ist, den Sitzungsschlüssel auf das Integritätsmodul (50) und das Vertraulichkeitsmodul (49) zu laden;
vi. die Sicherheitsstecker (24; 45) dazu konzipiert sind, Nachrichten vom Hauptschlüsselserver her zu empfangen und eine kryptographische Verarbeitung anzuwenden, die umgekehrt/identisch zu denjenigen des Hauptschlüsselservers ist, und Sicherheitsansprüche des Senders zu verifizieren;
vii. das Vertraulichkeitsmodul (49) und das Integritätsmodul (50) dazu konzipiert sind, auf den Empfang eines Aktivierungssignals vom Hauptschlüsselserver hin mit Sitzungsschlüsseln versorgt zu werden, wobei das Schlüsselverwaltungsmodul (47) dazu konzipiert ist, auf den Empfang des Aktivierungssignals vom Hauptschlüsselserver hin aktualisiert zu werden; und
b. eine sichere Kommunikation, wobei das Vertraulichkeitsmodul (49) und das Integritätsmodul (50) dazu konzipiert sind, von einer Steuerung her empfangene Nachrichten zu verarbeiten.

6. System nach Anspruch 1, wobei der eine oder die mehreren Sicherheitsstecker (24; 45) unter Verwendung von Field Programmable Gate Arrays oder anwendungsspezifischen integrierten Schaltungen implementiert sind.

7. Vorrichtung (24; 45) zum Bereitstellen sicherer Echtzeitkommunikation in einem Automationsnetz (19), das verdrahtet oder drahtlos oder eine Kombination aus verdrahteter und drahtloser Technologie sein kann, und das eine Vielzahl von Automationskomponenten umfasst, die durch ein Steuernetz verbunden sind, das mit einer Vielzahl von Steuerungen, Feldgeräten und intelligenten elektronischen Geräten interagiert, wobei die Vorrichtung umfasst:
a. eine Sicherheitslogik (46), um mehrere Komponenten zu integrieren, die umfassen:
i. ein Schlüsselverwaltungsmodul (47);
ii. eine Rundfunkschlüsselerstellungsmodul (48);
iii. ein Vertraulichkeitsmodul (49); und
iv. ein Integritätsmodul (50);
b. eine Ethernet-Kommunikationslogik, die umfasst:
i. eine Sicherheitsurladekommunikationslogik (52); und
ii. eine Kommunikationslogik (54); und
c. ein Ablaufverwaltungsmodul (51) zum Sicherstellen eines Datenflusses und einer Operationssteuerung und zum Steuern und miteinander Vernetzen der verschiedenen Module untereinander; und
wobei
- das Schlüsselverwaltungsmodul (47) dazu konzipiert ist, Sicherheitsurladeinformationen zu speichern, die von der Sicherheitsurladekommunikationslogik (52) erhältlich sind, und um Schnittstellen für andere Module der Vorrichtung bereitzustellen, um eine Sicherheitsurladeinformation abzurufen;
- das Rundfunkschlüsselerstellungsmodul (48) dazu konzipiert ist, eine langfristige Sicherheitsurladeinformation zum Generieren und Verteilen von kurzfristigen Sitzungsrundfunkschlüsseln anhand der Dienste der Kommunikationslogik (54), des Vertraulichkeitsmoduls (49), des Integritätsmoduls (50) und des Ablaufverwaltungsmoduls (51) zu verwenden;
- das Vertraulichkeitsmodul (49) dazu konzipiert ist, Schnittstellen zum Verschlüsseln und Entschlüsseln von Daten bereitzustellen;
- das Integritätsmodul (50) dazu konzipiert ist, Schnittstellen zum Generieren und Verifizieren einer Sicherheitsprüfsumme für Daten bereitzustellen;
- die Sicherheitsurladekommunikationslogik (52) dazu konzipiert ist, einen Nahfeld- oder physisch geschützten Kommunikationskanal bereitzustellen, der durch das Schlüsselverwaltungsmodul (47) verwendet werden soll, um Schlüsselverwaltungsoperationen durchzuführen; und
- die Kommunikationslogik (54) dazu konzipiert ist, Datenschnittstellen für das Ablaufverwaltungsmodul (51) zur Interaktion mit irgendeinem physischen Medium bereitzustellen;
wobei der eine oder die mehreren Sicherheitsstecker (24; 45) dazu konzipiert sind, eine Betriebsphase der Rundfunkgeheimschlüsselerstellung zu haben, wobei ein Schlüsselservermodul dazu konzipiert ist, bestimmte Nachrichten zu senden und zu empfangen, die sich auf die Identifizierung eines von vielen Schlüsselservern als Hauptschlüsselserver beziehen, wobei der Hauptschlüsselserver zum Generieren und Erstellen des Sitzungsschlüssels unter allen Sicherheitssteckern (24; 45) bestimmt ist, und wobei das Vertraulichkeitsmodul (49) und das Integritätsmodul (50) jedes Sicherheitssteckers dazu konzipiert sind, auf einen Empfang eines Aktivierungssignals vom Hauptschlüsselserver hin mit Sitzungsschlüsseln versorgt zu werden, und wobei das Schlüsselverwaltungsmodul (47) jedes Sicherheitssteckers dazu konzipiert ist, auf den Empfang des Aktivierungssignals vom Hauptschlüsselserver hin aktualisiert zu werden.

8. Vorrichtung nach Anspruch 7, wobei die Sicherheitsurladekommunikationslogik (52) dazu konzipiert ist, einen Nahfeldkommunikations- oder einen physisch geschützten Kommunikationskanal mit einem physischen Draht bereitzustellen.

9. Vorrichtung nach Anspruch7, wobei die Kommunikationslogik (54) dazu konzipiert ist, mit Protokollen wie IP, Ethernet, Wireless LAN, Foundation Fieldbus, Modbus und jeglichem über Ethernet operierenden Protokoll zu interagieren.

10. Verfahren zum Bereitstellen sicherer Echtzeitkommunikation in einem Automationsnetz (19), das verdrahtet oder drahtlos oder eine Kombination aus verdrahteter und drahtloser Technologie sein kann, und das eine Vielzahl von Automationskomponenten umfasst, die durch ein Steuernetz verbunden sind, das mit einer Vielzahl von Steuerungen, Feldgeräten und intelligenten elektronischen Geräten interagiert, die mit a) einem oder mehreren Sicherheitssteckern (24; 45) und b) einem oder mehreren Schlüsselserver/n (27) verbunden sind, wobei der eine oder die mehreren Sicherheitsstecker (24; 45) Ethernet-basiert sind und das Verfahren umfasst, den einen oder die mehreren Sicherheitsstecker urzuladen, wobei das Urladen umfasst:
i. eine Geheimschlüsselerstellung; und
ii. eine sichere Kommunikation, wobei von einer Steuerung her empfangene Nachrichten durch ein Vertraulichkeitsmodul (49) und ein Integritätsmodul (50) des jeweiligen Sicherheitssteckers (24; 45) verarbeitet werden, wobei das Vertraulichkeitsmodul (49) Schnittstellen zur Verschlüsseln und Entschlüsseln von Daten bereitstellt, und das Integritätsmodul (50) Schnittstellen zum Generieren und Verifizieren einer Sicherheitsprüfsumme für Daten bereitstellt;
wobei der eine oder die mehreren Sicherheitsstecker (24; 45) dazu konzipiert ist bzw. sind, eine Betriebsphase der Rundfunkgeheimschlüsselerstellung zu haben, wobei ein Schlüsselservermodul dazu konzipiert ist, bestimmte Nachrichten zu senden und zu empfangen, die sich auf die Identifizierung eines von vielen Schlüsselservern als Hauptschlüsselserver beziehen, wobei der Hauptschlüsselserver zum Generieren und Erstellen des Sitzungsschlüssels unter allen Sicherheitssteckern (24; 45) bestimmt ist, und wobei das Vertraulichkeitsmodul (49) und das Integritätsmodul (50) jedes Sicherheitssteckers dazu konzipiert sind, auf einen Empfang eines Aktivierungssignals vom Hauptschlüsselserver hin mit Sitzungsschlüsseln versorgt zu werden, und wobei das Schlüsselverwaltungsmodul (47) jedes Sicherheitssteckers dazu konzipiert ist, auf den Empfang des Aktivierungssignals vom Hauptschlüsselserver hin aktualisiert zu werden.

11. Verfahren nach Anspruch 10, wobei das Urladen einen Schritt umfasst, um auszuwählen aus:
i. einem Urlademodus, wobei a) ein separater Kommunikationskanal oder b) ein integrierter Kommunikationskanal zum Urladen des einen oder der mehreren Sicherheitsstecker (24; 45) verwendet wird; und
ii. einer Urladezeit, wobei a) Hauptschlüssel zum Herstellungszeitpunkt des einen Sicherheitssteckers oder der mehreren Sicherheitsstecker (24; 45) konfiguriert werden oder b) die Hauptschlüssel während der Installation oder Kommissionierung des einen Sicherheitssteckers oder der mehreren Sicherheitsstecker (24; 45) konfiguriert werden.

12. Verfahren nach Anspruch 10, wobei der Schritt der Geheimschlüsselerstellung die folgenden Schritte umfasst:
i. Senden und Empfangen bestimmter Nachrichten am Schlüsselservermodul, die sich auf eine Wahl eines der Schlüsselserver, die in allen Sicherheitssteckern (24; 45) vorhanden sind, als Hautsicherheitsstecker bezieht;
ii. Generieren und Erstellen eines Sitzungsschlüssels unter allen Sicherheitssteckern (24; 45);
iii. Senden von Schlüsselerstellungsnachrichten an alle Sicherheitsstecker (24; 45) in dem Netz durch das Rundfunkschlüsselerstellungsmodul (48) unter Verwendung des Vertraulichkeitsmoduls (49) und des Integritätsmoduls (50), wobei es in der Verantwortlichkeit des Schlüsselverwaltungsmoduls liegt, langfristige Schlüssel für das Integritätsmodul (50) und Vertraulichkeitsmodul (49) so auf das Rundfunkschlüsselerstellungsmodul (48) zu laden, dass das Vertraulichkeitsmodul (49) und das Integritätsmodul (50) nicht mit einem Ablaufsteuermodul (51) kommunizieren und die Kommunikationen durch das Rundfunkschlüsselerstellungsmodul (48) gesendet und empfangen werden;
iv. Aktualisieren eines Schlüsselverwaltungsmoduls (47) mit Hauptschlüsseln und Initialisierungsvektoren;
v. Laden eines Sitzungsschlüssels auf das Integritätsmodul (50) und das Vertraulichkeitsmodul (49) mittels des Rundfunkschlüsselerstellungsmoduls (48);
iii. Bestimmen anderer Sicherheitsstecker als untergeordnete Sicherheitsstecker, um Nachrichten vom Hauptsicherheitsstecker her zu empfangen und eine notwendige kryptographische Verarbeitung anzuwenden, die identisch zu derjenigen des Hauptsicherheitssteckers ist, und Sicherheitsansprüche des Senders zu verifizieren;
vi. auf den Empfang eine Aktivierungssignals vom Hauptsicherheitsstecker hin, Laden von Sitzungsschlüsseln auf das Vertraulichkeitsmodul (49) und das Integritätsmodul (50), und Aktualisieren des Schlüsselverwaltungsmoduls (47).

13. Verfahren nach Anspruch 10, umfassend: Unterstützen von sicherer Kommunikation unter Verwendung von Unicast-, Multicast- oder Rundfunkkommunikation.

## Revendications

1. Système de fourniture d'une sécurité de communication par radiodiffusion via Ethernet pour un réseau d'automatisation (19) qui peut être câblé ou sans fil ou une combinaison de technologie câblée ou sans fil et qui comprend une pluralité de composants d'automatisation, sachant que le système comprend :
a. une ou plusieurs fiches de sécurité (24 ; 45) destinée à fournir une sécurité de communication par radiodiffusion entre un ensemble arbitraire de composants d'automatisation raccordés au réseau d'automatisation (19), sachant que les fiches de sécurité (24 ; 45) sont basées sur Ethernet et indépendantes en termes de protocole d'application ;
b. un serveur de clés de radiodiffusion, destiné à distribuer des clés à l'une ou aux plusieurs fiches de sécurité (24 ; 45) pour communiquer de manière sécurisée ; et
c. des moyens d'amorçage destinés à effectuer une initialisation et une gestion de clés sur l'une ou les plusieurs fiches de sécurité (24 ; 45) ; et sachant que
la fiche de sécurité (24 ; 45) respective comprend :
a. un module de gestion de clés (47) destiné à stocker des informations d'amorce de sécurité disponibles depuis une logique de communication d'amorce de sécurité (52) et à fournir des interfaces pour d'autres modules du dispositif pour récupérer des informations d'amorce de sécurité ;
b. un module d'établissement de clés de radiodiffusion (48) destiné à utiliser des informations d'amorce de sécurité à long terme pour générer et distribuer des clés de radiodiffusion de session à court terme moyennant les services d'une logique de communication (54), d'un module de confidentialité (49), d'un module d'intégrité (50) et d'un module de gestion de flux (51) ;
c. le module de confidentialité (49) destiné à fournir des interfaces destinées à crypter et décrypter des données ;
d. le module d'intégrité (50) destiné à fournir des interfaces destinées à générer et vérifier une somme de contrôle de sécurité pour des données ;
e. le module de gestion de flux (51) destiné à assurer un flux de données et une commande opérationnelle et à commander et interfacer les divers modules les uns avec les autres ;
f. la logique de communication d'amorce de sécurité (52) destinée à fournir un canal de communication à champ proche ou protégé physiquement devant être utilisé par le module de gestion de clés (47) pour effectuer des opérations de gestion de clés; et
g. la logique de communication (54) destinée à fournir des interfaces de données pour le module de gestion de flux (51) pour interagir avec tout support physique ;
sachant que l'une ou les plusieurs fiches de sécurité (24, 45) sont conçues pour avoir une phase de fonctionnement d'établissement de clés secrètes de radiodiffusion, sachant qu'un module de serveur de clés est conçu pour envoyer et recevoir certains messages relatifs à l'identification d'un parmi de nombreux serveurs de clés en tant que serveur de clés maîtres, sachant que le serveur de clés maîtres est destiné à générer et établir la clé de session parmi toutes les fiches de sécurité (24, 45) et sachant que le module de confidentialité (49) et le module d'intégrité (50) de chaque fiche de sécurité sont conçus pour être chargés avec des clés de session lors de la réception d'un signal d'activation depuis le serveur de clés maîtres et sachant que le module de gestion de clés (47) de chaque fiche de sécurité est conçu pour être mis à jour lors de la réception du signal d'activation depuis le serveur de clés maîtres.

2. Système de la revendication 1, sachant que la fiche de sécurité (24 ; 45) est déployée au moyen d'au moins l'un de :
a. un mode interne (33), sachant que la fiche de sécurité (24 ; 45) est placée intégralement avec un des composants d'automatisation de telle sorte qu'une connexion en série existe sur la fiche de sécurité (24 ; 45), le composant d'automatisation et le réseau d'automatisation (19) ;
b. un mode externe (34), sachant que la fiche de sécurité (24 ; 45) est placée en série entre le composant d'automatisation et le réseau d'automatisation (19); et
c. un mode hybride (35) qui est une combinaison du mode interne (33) et du mode externe (34).

3. Système de la revendication 1, sachant que les moyens d'amorçage sont conçus pour établir des clés maîtres ou des clés à long terme utilisées pour dériver des clés de session ou des clés à court terme, et pour inclure une pluralité d'options pour :
a. un mode d'amorce (40), sachant que a) un canal de communication séparé ou b) un canal de communication intégré est utilisé pour amorcer les fiches de sécurité ; et
b. un temps d'amorce (41), sachant que a) les clés maîtres sont configurées au moment de la fabrication des fiches de sécurité (24 ; 45) ou b) les clés maîtres sont configurées pendant l'installation ou la mise en service des fiches de sécurité (24 ; 45).

4. Système de la revendication 1, comprenant un moyen (48) d'établissement de clés de radiodiffusion et de sécurité de données de radiodiffusion pour prendre en charge une sécurité de communication par radiodiffusion, sachant que le moyen d'établissement de clés de radiodiffusion (48) inclut un mécanisme de confidentialité et d'intégrité, sachant qu'un établissement de clés de radiodiffusion unique permet une communication sécurisée par diffusion individuelle, diffusion multiple ou radiodiffusion.

5. Système de la revendication 1, sachant que l'une ou les plusieurs fiches de sécurité sont conçues pour avoir deux phases de fonctionnement incluant :
a. un établissement de clés secrètes de radiodiffusion, sachant que :
i. un module de serveur de clés est conçu pour envoyer et recevoir certains messages relatifs à l'identification d'un parmi de nombreux serveurs de clés en tant que serveur de clés maîtres ;
ii. le serveur de clés maîtres est conçu pour générer et établir la clé de session parmi la totalité des fiches de sécurité ;
iii. un module d'établissement de clés de radiodiffusion (48) est conçu pour utiliser un module de confidentialité (49) et un module d'intégrité (50) pour envoyer des messages d'établissement de clés à la totalité des fiches de sécurité (24 ; 45) dans le réseau, sachant qu'il est de la responsabilité du module de gestion de clés (47) de charger des clés à long terme pour le module d'intégrité (50) et le module de confidentialité (49) sur le module d'établissement de clés de radiodiffusion (48) de telle sorte que le module de confidentialité (49) et le module d'intégrité (50) ne communiquent pas à un module de commande de flux (51) et les communications soient envoyées et reçues par le module d'établissement de clés de radiodiffusion (48) ;
iv. le module de gestion de clés (47) est conçu pour être mis à jour avec les dernières clés maîtres et vecteurs d'initialisation ;
v. le module d'établissement de clés de radiodiffusion (48) est conçu pour charger la clé de session sur le module d'intégrité (50) et le module de confidentialité (49) ;
vi. les fiches de sécurité (24 ; 45) sont conçues pour recevoir des messages depuis le serveur de clés maîtres et pour appliquer un traitement cryptographique inverse/identique à celui du serveur de clés maître et vérifier les exigences de sécurité de l'émetteur ;
vii. le module de confidentialité (49) et le module d'intégrité (50) sont conçus pour être chargés avec des clés de session lors de la réception d'un signal d'activation depuis le serveur de clés maîtres, sachant que le module de gestion de clés (47) est conçu pour être mis à jour lors de la réception du signal d'activation depuis le serveur de clés maîtres ; et
b. une communication sécurisée, sachant que le module de confidentialité (49) et le module d'intégrité (50) sont conçus pour traiter des messages reçus depuis un dispositif de commande.

6. Système de la revendication 1, sachant que l'une ou les plusieurs fiches de sécurité (24 ; 45) sont implémentées moyennant des réseaux prédiffusés programmables (FPGA) ou des circuits intégrés spécifiques à l'application.

7. Dispositif (24 ; 45) destiné à fournir une communication sécurisée en temps réel dans un réseau d'automatisation (19) qui peut être câblé ou sans fil ou une combinaison de technologie câblée ou sans fil et qui comprend une pluralité de composants d'automatisation connectés par un réseau de commande interagissant avec une pluralité de dispositifs de commande, dispositifs de terrain et dispositifs électroniques intelligents, sachant que le dispositif comprend :
a. une logique de sécurité (46) destinée à incorporer plusieurs composants qui inclue :
i. un module de gestion de clés (47) ;
ii. un module d'établissement de clés de radiodiffusion (48) ;
iii. un module de confidentialité (49) ; et
iv. un module d'intégrité (50) ;
b. une logique de communication Ethernet incluant :
i. une logique de communication d'amorce de sécurité (52) ; et
ii. une logique de communication (54) ; et
c. un module de gestion de flux (51) destiné à assurer un flux de données et une commande opérationnelle et à commander et interfacer les divers modules les uns avec les autres ; et sachant que
- le module de gestion de clés (47) est conçu pour stocker des informations d'amorce de sécurité disponibles depuis la logique de communication d'amorce de sécurité (52) et pour fournir des interfaces pour d'autres modules du dispositif pour récupérer des informations d'amorce de sécurité ;
- le module d'établissement de clés de radiodiffusion (48) est conçu pour utiliser des informations d'amorce de sécurité à long terme pour générer et distribuer des clés de radiodiffusion de session à court terme moyennant les services de la logique de communication (54), du module de confidentialité (49), du module d'intégrité (50) et du module de gestion de flux (51) ;
- le module de confidentialité (49) est conçu pour fournir des interfaces destinées à crypter et décrypter des données ;
- le module d'intégrité (50) est conçu pour fournir des interfaces destinées à générer et vérifier une somme de contrôle de sécurité pour des données ;
- la logique de communication d'amorce de sécurité (52) est conçue pour fournir un canal de communication à champ proche ou protégé physiquement devant être utilisé par le module de gestion de clés (47) pour effectuer des opérations de gestion de clés; et
- la logique de communication (54) est conçue pour fournir des interfaces de données pour le module de gestion de flux (51) pour interagir avec tout support physique ;
sachant que l'une ou les plusieurs fiches de sécurité (24, 45) sont conçues pour avoir une phase de fonctionnement d'établissement de clés secrètes de radiodiffusion, sachant qu'un module de serveur de clés est conçu pour envoyer et recevoir certains messages relatifs à l'identification d'un parmi de nombreux serveurs de clés en tant que serveur de clés maîtres, sachant que le serveur de clés maîtres est destiné à générer et établir la clé de session parmi toutes les fiches de sécurité (24, 45) et sachant que le module de confidentialité (49) et le module d'intégrité (50) de chaque fiche de sécurité sont conçus pour être chargés avec des clés de session lors de la réception d'un signal d'activation depuis le serveur de clés maîtres et sachant que le module de gestion de clés (47) de chaque fiche de sécurité est conçu pour être mis à jour lors de la réception du signal d'activation depuis le serveur de clés maîtres.

8. Dispositif de la revendication 7, sachant que la logique de communication d'amorce de sécurité (52) est conçue pour fournir un canal de communication à champ proche ou physiquement protégé avec un fil physique.

9. Dispositif de la revendication 7, sachant que la logique de communication (54) est conçue pour interagir avec des protocoles comme IP, Ethernet, LAN sans fil, Foundation Fieldbus, Modbus et tout protocole fonctionnant via Ethernet.

10. Procédé destiné à fournir une communication sécurisée en temps réel dans un réseau d'automatisation (19) qui peut être câblé ou sans fil ou une combinaison de technologie câblée ou sans fil et qui comprend une pluralité de composants d'automatisation connectés par un réseau de commande interagissant avec une pluralité de dispositifs de commande, dispositifs de terrain et dispositifs électroniques intelligents qui sont couplés à a) une ou plusieurs fiches de sécurité (24 ; 45) et b) un ou plusieurs serveurs de clés (27), sachant que l'une ou les plusieurs fiches de sécurité (24 ; 45) sont basées sur Ethernet et le procédé comprend l'amorçage de l'une ou des plusieurs fiches de sécurité, sachant que l'amorçage inclut :
i. un établissement de clés secrètes ; et
ii. une communication sécurisée, sachant que des messages reçus depuis un dispositif de commande sont traités par un module de confidentialité (49) et un module d'intégrité (50) de la fiche de sécurité (24 ; 45) respective, sachant que le module de confidentialité (49) fournit des interfaces destinées à crypter et décrypter des données, et le module d'intégrité (50) fournit des interfaces destinées à générer et vérifier une somme de contrôle de sécurité pour des données ;
sachant que l'une ou les plusieurs fiches de sécurité (24, 45) sont conçues pour avoir une phase de fonctionnement d'établissement de clés secrètes de radiodiffusion, sachant qu'un module de serveur de clés est conçu pour envoyer et recevoir certains messages relatifs à l'identification d'un parmi de nombreux serveurs de clés en tant que serveur de clés maîtres, sachant que le serveur de clés maîtres est destiné à générer et établir la clé de session parmi toutes les fiches de sécurité (24, 45) et sachant que le module de confidentialité (49) et le module d'intégrité (50) de chaque fiche de sécurité sont conçus pour être chargés avec des clés de session lors de la réception d'un signal d'activation depuis le serveur de clés maîtres et sachant qu'un module de gestion de clés (47) de chaque fiche de sécurité est conçu pour être mis à jour lors de la réception du signal d'activation depuis le serveur de clés maîtres.

11. Procédé de la revendication 10, sachant que l'amorçage inclut une étape pour sélectionner parmi :
i. un mode d'amorce, sachant que a) un canal de communication séparé ou b) un canal de communication intégré est utilisé pour amorcer l'une ou les plusieurs fiches de sécurité (24 ; 45) ; et
ii. un temps d'amorce, sachant que a) des clés maîtres sont configurées au moment de la fabrication de l'une ou des plusieurs fiches de sécurité (24 ; 45) ou b) les clés maîtres sont configurées pendant l'installation ou la mise en service de l'une ou des plusieurs fiches de sécurité (24 ; 45).

12. Procédé de la revendication 10, sachant que l'étape d'établissement de clés secrètes comprend les étapes de :
i. envoi et réception de certains messages au niveau du module de serveur de clés relatifs à une élection d'un des serveurs de clés présents dans toutes les fiches de sécurité (24 ; 45) en tant que fiche de sécurité maître ;
ii. génération et établissement d'une clé de session parmi toutes les fiches de sécurité (24 ; 45) ;
iii. envoi de messages d'établissement de clés à toutes les fiches de sécurité (24 ; 45) dans le réseau par le module d'établissement de clés de radiodiffusion (48) moyennant le module de confidentialité (49) et le module d'intégrité (50), sachant qu'il est de la responsabilité du module de gestion de clés de charger les clés à long terme nécessaires pour le module d'intégrité (50) et le module de confidentialité (49) sur le module d'établissement de clés de radiodiffusion (48) de telle sorte que le module de confidentialité (49) et le module d'intégrité (50) ne communiquent pas à un module de commande de flux (51) et les communications soient envoyées et reçues par le module d'établissement de clés de radiodiffusion (48) ;
iv. mise à jour d'un module de gestion de clés (47) avec des clés maîtres et vecteurs d'initialisation ;
v. chargement d'une clé de session sur le module d'intégrité (50) et le module de confidentialité (49) moyennant le module d'établissement de clés de radiodiffusion (48) ;
vi. désignation d'autres fiches de sécurité en tant qu'esclaves destinés à recevoir des messages depuis la fiche de sécurité maître et à appliquer un traitement cryptographique nécessaire identique à celui de la fiche de sécurité maître, et à vérifier les exigences de sécurité de l'émetteur ;
vii. lors de la réception d'un signal d'activation depuis la fiche de sécurité maître, chargement de clés de session sur le module de confidentialité (49) et le module d'intégrité (50), et mise à jour dans le module de gestion de clés (47).

13. Procédé de la revendication 10, comprenant : la prise en charge d'une communication sécurisée moyennant une communication par diffusion individuelle, diffusion multiple ou radiodiffusion.
